# EUROPEAN PATENT APPLICATION

(11) **EP 4 527 964 A1**
(43) Date of publication of application: **26.03.2025**
(21) Application number: 23826550.8
(22) Date of filing: 21.06.2023
(51) Int. Cl.: C22C 38/00, C22C 38/06, C22C 38/58, C22C 38/46, C21D 9/46

(54) **HIGH-HOLE-EXPANSION-RATIO AND ULTRAHIGH-PLASTICITY STEEL AND MANUFACTURING METHOD THEREFOR**

(30) Priority: 22.06.2022 CN 202210713437
(71) Applicant: BAOSHAN IRON & STEEL CO., LTD., Shanghai 201900 (CN)
(72) Inventor: WANG, Huanrong, Shanghai 201900 (CN); ZHANG, Chen, Shanghai 201900 (CN); YANG, Ana, Shanghai 201900 (CN); PANG, Houjun, Shanghai 201900 (CN); FAN, Jiajie, Shanghai 201900 (CN); LU, Min, Shanghai 201900 (CN)
(74) Representative: Maiwald GmbH
(86) International application number: PCT/CN2023/101853
(87) International publication number: WO 2023/246905

(57) **Abstract**

The present invention provides a steel with high hole expansion rate and ultrahigh plasticity and a manufacturing method therefor. The steel comprises the following components in percentage by weight: C: 0.10~0.35%, Si: 0.8~2.0%, Mn: 1.0~2.5%, P≤0.02%, S≤0.005%, Al: 0.01~0.1%, N≤0.005%, V: 0.10~0.50%, O≤0.003%, with the balance being Fe and other inevitable impurities. The steel of the present invention has excellent mechanical properties, exhibits a good matching among yield strength, tensile strength, elongation and hole expansion rate, and can be widely applied to components with complex shape requirements, or other parts that require thinning while maintaining high strength, such as those in commercial or passenger vehicles.

## Description

### TECHNICAL FIELD

The present invention belongs to the field of steel and manufacturing method therefor, and particularly relates to a high-hole-expansion rate and ultrahigh-plasticity steel and a manufacturing method therefor.

### BACKGROUND

Automobile plays a crucial role in the development of the national economy. As is widely known, lightweighting of passenger car has always been a trend in the industry, prompting automotive manufacturers to continually pursue overall vehicle weight reduction. This includes reducing weight while maintaining high strength in various aspects such as chassis, body and seats, and even using other new materials such as aluminum alloy and carbon fiber. Compared to passenger cars, the lightweighting process for commercial vehicles is much slower. Considering that commercial vehicles may be overloaded during actual use, it is necessary to provide sufficient margins in their structural design, which affects the process of lightweighting in commercial vehicle.

The chassis parts of commercial vehicles, such as fuel tank brackets, battery brackets, gas cylinder brackets, and front underrun protection, are currently produced with low-strength thick-gauge ordinary steel such as Q345. Its typical composition includes: C: 0.12~0.20%, Si: 0.20~0.55%, Mn: 1.20~1.60%, P≤0.03%, S≤0.03%. Additionally, the forming processes for these parts is relatively complex, some require bolt connections and some require welding. With the development of lightweighting in commercial vehicles, many users hope to use cold stamping for the integrated forming of these parts in commercial vehicles, which reduces procedure and achieves lightweighting. Consequently, this places higher demands on the performance of hot-rolled high-strength steel, requiring it to have higher elongation and better formability while ensuring high strength. When using traditional high-strength steel for stamping parts such as fuel tank brackets, cracks may occur at the large arc of the parts, making smooth stamping impossible. Therefore, it is desirable to develop new high-strength steels having high tensile strength and excellent formability. For the aforementioned reasons, hot-rolled advanced high-strength steel with various strength levels, characterized by high tensile strength, ultra-high elongation rate, and high hole expansion rate, has been developed. This steel enables the stamping and forming of complex parts for both passenger and commercial vehicles, demonstrating promising application potential and significant development prospects.

There are already some prior art solutions for ultra-high plasticity steel, mostly focusing on the field of cold-rolled steel with high-strength, with some relate to hot-rolled steel with ultra-high plasticity.

For example, Chinese Patent Application CN104233092A discloses a 780 MPa grade steel with ultra-high plasticity, whose composition is designed to have a low carbon content and a high silicon content, and a certain amount of precious alloy elements such as Cr, Mo and Nb, resulting in relatively high alloy costs.

Chinese Patent Application CN107815593A discloses a steel with low silicon content and high aluminum content and with ultra-high plasticity, whose composition has low silicon content and high aluminum content, and a certain amount of precious element Cu. The production process mainly includes heat treatment in the two-phase zone for 1-3 minutes and then phase transformation in the bainite zone, to obtain 780 MPa grade heat-treated steel with ultra-high plasticity. However, the heat treatment process cannot be applied to hot rolling production lines.

Chinese Patent Application CN114107792A discloses a low-silicon titanium-molybdenum steel with high hole expansion rate, designed without vanadium in its composition. The steel exhibits high hole expansion characteristics in performance. Due to the absence of residual austenite in its microstructure, it cannot achieve a high level of elongation.

### SUMMARY OF THE INVENTION

The objective of the present invention is to provide a high-hole-expansion rate and ultrahigh-plasticity steel and a manufacturing method therefor. The high-hole-expansion rate and ultrahigh-plasticity steel has excellent mechanical properties and can achieve good matching among a relatively high yield strength, a high tensile strength, an ultra-high elongation rate and hole expansion rate, and can be widely applied to components with complex shape requirements, or other parts that require thinning while maintaining high strength, such as those in commercial or passenger vehicles.

The present invention adopts a relatively economical composition design concept and can be produced on existing hot rolling production lines.

In the first aspect, the present invention provides a steel comprising the following components in percentage by weight: C: 0.10~0.35%, Si: 0.8~2.0%, Mn: 1.0~2.5%, P≤0.02%, S≤0.005%, Al: 0.01~0.1%, N≤0.005%, V: 0.10~0.50%, O≤0.003%, with the balance being Fe and other inevitable impurities; wherein:
when the content of C is 0.10~0.25% and the content of V is 0.10~0.30%, the steel has a tensile strength of 780 MPa or more, an elongation rate of 30% or more, and a hole expansion rate of 65% or more; and
when the content of C is 0.25-0.35% and the content of V is 0.30-0.50%, the steel has a tensile strength of 980 MPa or more, an elongation rate of 25% or more, and a hole expansion rate of 50% or more.

Preferably, the above-mentioned steel further comprises one or more selected from the group consisting of Mo, Cu, Ni, Cr, Nb, V and B; wherein, in percentage by weight, Mo≤0.5%, Cu≤0.5%, Ni≤0.5%, Cr≤0.5%, Nb≤0.06%, V≤0.10%, B≤0.001%.

Preferably, the inevitable impurities include S ≤ 0.003 wt% and N ≤ 0.004 wt%.

Unless otherwise specified, the content of each element in the steel of the present invention refers to mass fraction.

In the composition design of the high-hole-expansion rate and ultrahigh-plasticity steel of the present invention:
Carbon is a basic element in steel, and is also one of the important elements in the present invention. Carbon can expand the austenite phase region and stabilizes austenite. As an interstitial atom in steel, carbon plays a crucial role in improving the strength of steel, and has the greatest impact on the yield strength and tensile strength of the steel, among others. Additionally, as an effective element for stabilizing residual austenite, carbon typically needs to be present at a relatively high level. In the present invention, in order to obtain high-strength steel having different levels of tensile strength and having a relatively large amount of stable residual austenite, the content of carbon must be greater than or equal 0.10%. However, the content of carbon cannot exceed 0.35%. Excessive content of carbon can easily lead to higher strength, reduction of elongation rate, and deterioration of welding performance. Therefore, the content of carbon should be controlled between 0.10-0.35%.

Silicon is a basic element in steel, and is also one of the important elements in the present invention. The increase of silicon content not only enhances the solid solution strengthening effect but, more importantly, has the following two effects. First, it greatly reduces the non-recrystallization temperature of the steel, allowing dynamic recrystallization to occur over a wide temperature range. This enables control of the finishing rolling temperature across a broader range during actual rolling, reducing the difference between transverse and longitudinal microstructure, improving the uniformity of microstructure, and facilitating the improvement of the strength and plasticity of the steel. The second important effect of silicon is to inhibit the precipitation of cementite. In the present invention, to obtain a microstructure mainly composed of bainite and more stable residual austenite, a relatively high amount of silicon needs to be added. This inhibitory effect of silicon on carbide formation is evident when the silicon content reaches 0.8% or more. However, the content of silicon in the steel should not be too high; otherwise, the rolling force load during actual rolling process will be too large, which is not conducive to stable production. Therefore, the silicon content in the steel of the present invention is controlled to 0.8-2.0%.

Manganese is the most fundamental elements in steel, and is also one of the most important elements in the present invention. Mn expands the austenite phase region, reduces the critical quenching rate of the steel, stabilizes austenite, refines grains, and delays the transition of austenite to pearlite. Additionally, during heat treatment process, Mn undergoes partition and diffuses from bainite into residual austenite, further stabilizing the residual austenite and increasing its content. A manganese content of at least 1.0% is required to achieve these effects. However, the content of manganese should not be too high. If the content of manganese exceeds 2.5%, it may lead to segregation in the continuous casting slab and the formation of a large amount of MnS inclusions. Therefore, the manganese content in the steel of the present invention is 1.0-2.5%.

Phosphorus is an impurity element in steel. P tends to segregate easily at grain boundaries. When the content of P in steel is relatively high (≥0.1%), Fe₂P is formed and precipitated around the grain, reducing the plasticity and toughness of the steel. Thus, the lower the content of P, the better. Generally, when the content of P is 0.02% or less, the steel has good performances without increasing steelmaking costs.

Sulfur is an impurity element in steel. In steel, S typically combines with Mn to form MnS inclusions, especially when the contents of S and Mn are both relatively high, a significant amount of MnS will be formed in the steel. MnS itself has a certain degree of plasticity. MnS deforms along the rolling direction during subsequent rolling process, which not only reduces the transverse plasticity of the steel, but also increases structure anisotropy, adversely affecting hole expansion performance. Therefore, the lower the content of S in steel, the better. To minimize the content of MnS, the content of S must be strictly controlled. The S content in the steel of the present invention is 0.005% or less, preferably 0.003% or less.

The primary functions of aluminum in steel are deoxidation and nitrogen fixation. In the presence of strong carbide-forming elements such as Ti, aluminum mainly acts as a deoxidizer and grain refiner. In the present invention, aluminum can be used as a conventional additive for deoxidation and nitrogen fixation, or can be increased to a certain content to promote the diffusion of carbon into residual austenite. As a common element for deoxidation and grain refinement, its content should be between 0.01-0.08% . When used to promote the diffusion of carbon into austenite, the aluminum content is typically less than 0.1% to promote the diffusion of carbon atoms into austenite and playing a role of grain refinement. When the aluminum content exceeds 1.5%, its effect of promoting carbon diffusion and enrichment becomes saturated. Therefore, the aluminum content in the steel of the present invention is between 0.01-1.5%.

Nitrogen is an impurity element in the present invention. The lower the N content, the better. However, nitrogen is an inevitable element in the steelmaking process. Although present in small amounts, nitrogen can combines with strong carbide-forming elements such as Ti to form TiN particles, which are detrimental to the performances of steel. Therefore, the content of nitrogen in the present invention is controlled to be 0.005% or less, preferably 0.004% or less.

Vanadium is an important element in the present invention. The present invention relates to an ultra-high plasticity steel with high hole expansion rate characteristics. However, the hole expansion rate and elongation rate are typically inversely proportional. To achieve high hole expansion rate under the premise of ultra-high plasticity, it is necessary to minimize the difference between yield strength and tensile strength, and improve the yield strength ratio. Therefore, combining with the medium temperature coiling process, a relatively high content of vanadium is added in the composition design. By utilizing the relatively low precipitation temperature of vanadium in bainite, nano-sized vanadium carbides are formed within the bainitic ferrite while forming bainite, thereby improving the yield strength ratio and obtaining ultra-high plasticity advanced high-strength steel with high hole expansion characteristics. Typically, a vanadium content of at least 0.10% is required to achieve a noticeable precipitation strengthening effect. With the increase of the vanadium content, its precipitation strengthening effect gradually enhances. When the vanadium content is increased to 0.50%, the precipitation strengthening effect of vanadium becomes saturated. Therefore, the vanadium content in the steel of the present invention is between 0.10-0.50%.

Oxygen is an inevitable impurity element during the steelmaking process. For the present invention, the oxygen content in steel can generally be reduced to 30 ppm or less after deoxidation, which does not significantly adversely affect the performance of the steel plate. The O content in the steel of the present invention is 30 ppm or less.

Molybdenum is one of the optional additive elements in the present invention. The addition of molybdenum to steel can greatly delay the transformation of pearlite, which is beneficial for obtaining bainite structure. Molybdenum also has the effect of delaying the transformation of ferrite. When a small amount of molybdenum is contained in the composition of alloy, the transformation of ferrite can be accelerated by adding more aluminum element. In addition, molybdenum has a strong resistance to welding softening. Since the primary objective of the present invention is to obtain a microstructure mainly consisting of ferrite, bainite, and residual austenite, and since high-strength steel is prone to softening after welding, the addition of an appropriate amount of molybdenum can effectively reduce the degree of welding softening. Considering the high cost of molybdenum, its addition amount should be controlled to meet performance requirements while minimizing alloy costs as much as possible. Therefore, the molybdenum content in the steel of the present invention is 0.5% or less.

Copper is one of the optional additive elements in the present invention. The addition of copper to steel can improve the corrosion resistance of the steel, and when combined with phosphorus, the corrosion resistance effect of steel is even better. When the addition amount of Cu exceeds 1%, an ε-Cu precipitation phase may be formed under certain conditions, which has a relatively strong precipitation strengthening effect. However, the addition of Cu tends to result in "Cu-brittleness" phenomenon during the rolling process. To fully utilize the corrosion resistance benefits of Cu in specific applications while avoiding significant "Cu-brittleness" phenomenon, the content of Cu in the present invention is controlled to be 0.5% or less.

Nickel is one of the optional additive elements in the present invention. The addition of nickel to steel provides a certain level of corrosion resistance, though its corrosion resistance effect is weaker than copper. The addition of nickel in steel has little effect on the tensile properties of the steel, but can refine the structure and precipitation phases of steel and greatly improve the low-temperature toughness of steel. Additionally, in steel added with copper, the addition of a small amount of nickel can inhibit the occurrence of "Cu-brittleness". The addition of relatively high amount of nickel does not have any significant adverse effect on the properties of the steel itself. When both copper and nickel are added, they not only improve corrosion resistance, but also refine the structure and precipitate phases of the steel, greatly improving the low-temperature toughness. However, both copper and nickel are relatively valuable alloying elements. Therefore, to minimize the cost of alloy design, the amount of nickel added is typically 0.5% or less.

Chromium is one of the optional additive elements in the present invention. The addition of chromium to steel can improves its strength mainly through mechanisms such as solid solution strengthening or microstructure refinement. The microstructure of the present invention consists of fine bainitic ferrite and nano-precipitated cementite. Additionally, the number of movable dislocations in the microstructure decreases after high-temperature bell-type annealing process. Therefore, the ratio of yield strength to tensile strength (yield strength ratio) of the steel is relatively high, typically reaching 0.90 or more. The addition of a small amount of chromium can moderately reduce the yield strength of steel, thereby reducing the yield strength ratio. In addition, the addition of a small amount of chromium can also improve corrosion resistance. Overall, the addition amount of chromium is ≤ 0.5% in the present invention.

Niobium is one of the optional additive elements in the present invention. Similar to titanium, niobium is a strong carbide-forming element in steel. The addition of niobium to steel can greatly increase the non-recrystallization temperature of steel, allowing the formation of deformation austenite with higher dislocation density during the finish rolling stage, and refine the final phase transition structure during the subsequent transformation process. However, the amount of niobium added should not be too much. On one hand, when the amount of niobium added exceeds 0.06%, it is prone to form a relatively coarse niobium-carbonitride in the structure, which is not conducive to the impact toughness of the steel. On the other hand, a large amount of niobium is easy to cause anisotropy in hot-rolled austenite structure. Therefore, the niobium content in the steel of the present invention is 0.06% or less.

Titanium is one of the optional additive elements in the present invention., Similar to niobium and vanadium, titanium is also a strong carbide-forming element. However, titanium carbides have a high solubility or precipitation temperature and are typically fully solid dissolved in austenite during the finish rolling stage. Only when the phase transition beginning temperature is relatively high, such as 550 °C or more, the precipitation kinetics are relatively fast, and carbides of titanium are formed in the ferrite. However, in this invention, since the coiling temperature falls within a medium range, the precipitation strengthening effect of titanium is relatively weak. Therefore, the amount of titanium added in the steel of the present invention is ≤ 0.10%.

Boron is one of the optional additive elements in the present invention. Boron can greatly improve the hardenability of steel, which is beneficial for obtaining martensitic structure. Considering that the desired microstructure in the hot-rolling stage of the present invention is bainite, it is necessary to strictly control the content of boron in the steel prevent the formation of martensite due to excessive addition of boron. Therefore, the amount of boron added in the steel of the present invention is ≤ 0.001%.

Preferably, the present invention can provide two steel products with different mechanical properties through the combination of C content and V content in steel. Specifically, when the content of C is 0.10~0.25% and the content of V is 0.10~0.30%, the steel has a tensile strength of 780 MPa or more, an elongation rate of 30% or more, and a hole expansion rate of 65% or more; and when the content of C is 0.25-0.35% and the content of V is 0.30-0.50%, the steel has a tensile strength of 980 MPa or more, an elongation rate of 25% or more, and a hole expansion rate of 50% or more.

Preferably, the steel has a microstructure of bainite and residual austenite, with the content of the austenite being ≥ 5%, preferably 5-15%, more preferably 5-12%, and the bainite contains nano-precipitated VC (Vanadium Carbide).

Unless otherwise specified, the content of each microstructure in the steel of the present invention refers to its volume fraction.

The primary microstructures in the steel of the present invention are bainite and residual austenite. The bainitic ferrite in the bainite contains nano-sized carbides. Bainite and nano-precipitates endow the steel plate with high yield strength and tensile strength, while the residual austenite endows the steel plate with ultra-high elongation rate.

Preferably, the above-mentioned steel has a yield strength of 700 MPa or more.

Considering comprehensively the manufacturing cost of the steel, it is preferred that the steel of the present invention has a yield strength of 900 MPa or less, a tensile strength of 1100 MPa or less, an elongation rate of 25% or less, and a hole expansion rate of 100% or less.

Another aspect of the present invention provides a method for manufacturing the above-mentioned steel, including the following steps:
1) smelting and casting
   smelting molten steel in a converter or an electric furnace according to the above-mentioned components, then secondary refining in a vacuum furnace, and then casting it into a casting blank or a casting ingot;
2) reheating the casting blank or the casting ingot
   heating temperature ≥ 1100 °C, holding time: 1-2 hours;
3) hot rolling and cooling the casting blank or the casting ingot
   wherein the casting blank or the casting ingot is rolled at an initial rolling temperature of 1000 °C to 1100°C, then subjected to multiple passes of rolling with a relatively large deformation rate of 50% or more at 1000°C or higher to obtain an intermediate blank, then subjected to 3-5 passes of final rolling with a cumulative deformation of 70% or more after the intermediate blank reaches 950 °C to 1000 °C, obtaining a steel strip; wherein the final rolling temperature is 800~950 °C;
   wherein the cooling is controlled cooling, after the final rolling, the steel strip is water-cooled to a temperature between 400~550 °C at a cooling rate of 10 °C/s or more and coiled, and then steel coil is cooled to room temperature.

Preferably, the above-mentioned method further includes step 4) pickling, wherein the strip steel is pickled at a running speed of 30~140 m/min, with a pickling temperature of 75~85 °C and a straightening rate of 3% or less, and then rinsed at a temperature in the range of 35~50 °C, and the surface of the hot-rolled strip steel is dried at a temperature of 120~140 °C, and oiled.

After the hot-rolled strip steel is pickled, a pickled steel with high-performance stability and ultra-high hole expansion rate is obtained.

The beneficial effects of the method for manufacturing the above-mentioned steel of the present invention are as follows.

This invention employs an innovative composition design of medium-to-low carbon and high vanadium, combined with an innovative hot-rolling medium-temperature coiling control technique and a matching technology of nano-precipitation and bainite phase transformation. This enables the production of advanced high-strength steel with various strength levels, characterized by high yield strength, high tensile strength, ultra-high plasticity, and a high hole expansion rate. A relatively high carbon content is beneficial for obtaining high strength, and provides a large amount of available carbon atoms that can diffuse into residual austenite, resulting in highly stable residual austenite. The main purpose of adding a relatively high silicon content is to inhibit the formation of carbides during the bainite phase transition process. A relatively high content of manganese can further improve the stability of residual austenite. Coiling at 400-550°C after the final rolling is primarily to obtain a microstructure of carbide-free bainite and residual austenite, while coordinating with vanadium carbide nano-precipitation.

It is based on this innovative composition and process design that the present invention can achieve a good match between ultra-high plasticity and high hole expansion rate across different strength levels. This ensures tensile strengths of ≥780 MPa and ≥980 MPa, while meeting elongation requirements of ≥30% and ≥25%, and hole expansion ratios of ≥65% and ≥50%, respectively.

Compared with prior arts, the solutions of the present invention have the following advantages or beneficial effects.

Compared with the ultra-high plasticity steels in existing patent documents, the present invention adopts a composition design of medium-to-low carbon, high silicon, and low aluminum, which is different from the traditional low-carbon, high-silicon or low-silicon, high-aluminum designs of conventional hot-rolled ultra-high plasticity steels.

In the steel disclosed in Chinese Patent Application CN104233092A, in addition to low carbon and high silicon, precious metal elements such as Cr, Mo, and Nb are added in the steel, resulting in relatively high alloy costs.

The composition design of Chinese Patent Application CN107815593A is low silicon and high aluminum with a certain amount of Cu. However, its process route for manufacturing the steel mainly involves heat treatment in a dual-phase zone followed by phase transformation in the bainite zone, which cannot be applied to the current hot rolling production lines.

The composition design of Chinese Patent Application CN114107792A is low silicon, titanium, and molybdenum without vanadium. Its performance is mainly characterized by high pore expansion. However, due to the absence of residual austenite in its microstructure, it cannot achieve a high level of elongation.

The present invention adopts an innovative composition design of medium-to-low carbon and high vanadium, combined with a medium-temperature coiling process. Through the cooperation of precise composition and process, an ultra-high plasticity advanced high-strength steel with high yield strength and high hole expansion rate characteristics can be obtained.

The steel with high expansion rate and ultra-high plasticity obtained by using the technology provided by the present invention has a yield strength of 700 MPa or more, even 800 MPa or more, and a tensile strength of 780 MPa or more, even 980 MPa or more. The hot-rolled picked product of the present invention has a thickness of 1.5-8.0 mm, and exhibits relatively high yield strength, ultra-high elongation rate (A ≥ 25%, even reaching 30% or more), and a high hole expansion rate (≥ 50%, even reaching 65% or more). The steel of the present invention has excellent mechanical properties and exhibits a matching among yield strength, tensile strength, plasticity, hole expansion performance and formability. It can be applied to the manufacturing of various complex parts of passenger or commercial vehicles and has promising application prospects.

### DESCRIPTION OF THE DRAWINGS

Figure 1 is a schematic diagram of the rolling process of the steel according to the present invention.
Figure 2 is a metallographic photograph of the steel in Example 1 of the present invention.
Figure 3 is a metallographic photograph of the steel in Example 3 of the present invention.
Figure 4 is a metallographic photograph of steel in Example 5 of the present invention.
Figure 5 is a metallographic photograph of the steel in Example 7 of the present invention.

### DETAILED DESCRIPTION

The present invention is further explained below in conjunction with the examples and drawings.

The compositions of the steels in the examples and comparative examples of the present invention are shown in Table 1. The balance in Table 1 is Fe and other inevitable impurities.

Table 2 shows the production process parameters of the steel in the examples of the present invention. Table 3 shows the performance parameters of the steel in the examples of the present invention. The process for manufacturing the steel in the examples of the present invention is as follows.
1) Smelting and casting:
   According to the composition in Table 1, molten steel was smelted in a converter or an electric furnace, then secondary refined in a vacuum furnace, and then casted into a casting blank or a casting ingot.
2) The casting blank or the casting ingot was reheated at a heating temperature of 1100 °C or higher and held for 1-2 hours.
3) Hot rolling and cooling the casting blank or the casting ingot:
   The casting blank or the casting ingot was rolled at an initial rolling temperature of 1000 °C to 1100°C, then subjected to multiple passes of rolling with a relatively large deformation rate of 50% or more at 1000°C or higher to obtain an intermediate blank, then subjected to 3-5 passes of final rolling with a cumulative deformation of 70% or more after the intermediate blank reaches 950 °C to 1000 °C, to obtain a steel strip. The final rolling temperature was 800~950 °C.

The cooling was controlled cooling. After the final rolling, the steel strip was water-cooled to a temperature between 400~550 °C at a cooling rate of 10 °C/s or more and coiled. Then, the steel coil was cooled to room temperature.

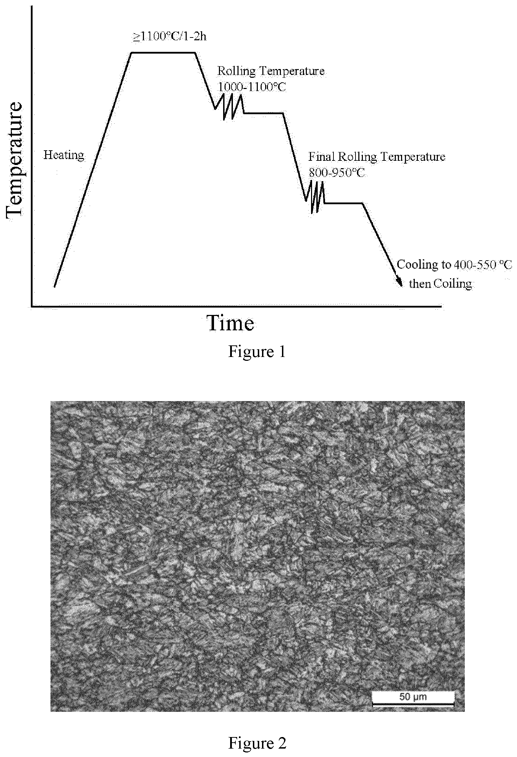

The above-mentioned process is shown in Figure 1.

Table 2 shows the production process parameters of the steel in the examples of the present invention.

The steel of comparative Examples 1-3 is selected from CN104233092A. The steel of comparative example 4 is selected from another patent application by the applicant, CN114107792A.

Table 3 shows the performance parameters of the steel in the examples and comparative examples of the present invention.

As shown in Table 3, the yield strength, tensile strength, and elongation of steel were tested in accordance with GB/T 228.1-2021 "Tensile testing of metallic materials - Part 1: Room temperature test method".

The hole expansion rate of steel was tested in accordance with GB/T 24524-2021 "Metallic Materials, Thin Plates and Strips, Test Method for Hole Expansion".

It can be seen from Table 1 that the examples of the present invention adopt a composition design of high silicon and high vanadium, while the comparative examples do not adopt high vanadium designs. The composition designs of the two are different.

Comparative examples 1-2 adopt a low-carbon composition design, while Comparative Example 4 adopts a composition design of low silicon and low manganese. The composition designs of all comparative examples are different from the composition designs of the examples.

It can be seen from Table 3 that although the tensile strength of Comparative Examples 1-3 is similar to that of the examples, their yield strength is lower. From the viewpoint of elongation rate and expansion rate, the elongation rate of the Comparative Examples is lower than that of the examples of the present invention, and no hole expansion rate data is provided in Comparative Examples 1-3. The microstructure of the Comparative Examples does not contain residual austenite, while the examples of the present invention contain ≥ 5% residual austenite, and the two are completely different in terms of microstructure type.

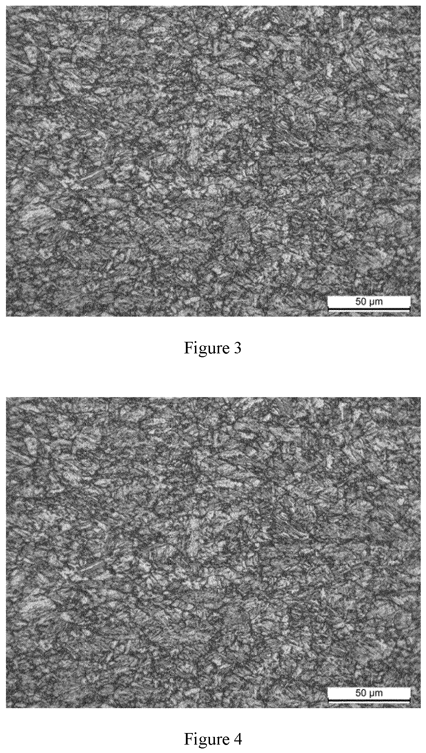

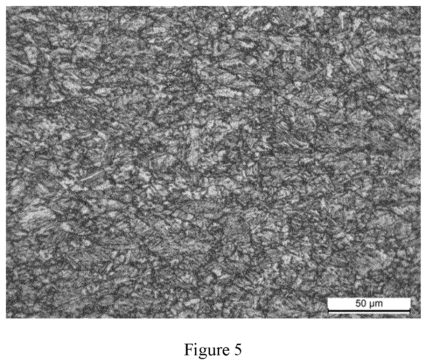

Figures 2-5 show metallographic photographs of the hot-rolled steel in Examples 1, 3, 5 and 7, respectively. These figures clearly demonstrate that the composition and process design according to the present invention achieve a microstructure mainly composed of bainite and residual austenite. This microstructure provides a good match of high yield strength, high tensile strength, ultra-high plasticity and high hole expansion rate, resulting in excellent overall performance.

It can also be seen from Table 3 that the yield strength of the steel of the present invention meets the requirements of ≥700 MPa and ≥800 MPa, with tensile strength of ≥780 MPa and ≥980 MPa, elongation of ≥30% and ≥25%, and hole expansion ratio of ≥65% and ≥50%, respectively.

In summary, the high-hole-expansion-rate and ultra-high-plasticity steel of the present invention has a good match of strength, ultra-high plasticity, and high hole expansion, making it particularly suitable for complex forming parts such as automotive chassis structures and has broad application prospects.

**Table 1 (Unit: weight percentage)**

| | C | Si | Mn | P | S | Al | N | O | V | Mo | Cu | Ni | Cr | Nb | Ti | B |
|---|---|---|---|---|---|---|---|---|---|---|---|---|---|---|---|---|
| Example 1 | 0.10 | 1.75 | 1.51 | 0.010 | 0.0029 | 0.042 | 0.0041 | 0.0018 | 0.18 | - | 0.5 | - | - | 0.05 | - | 0.0004 |
| Example 2 | 0.25 | 1.63 | 1.09 | 0.020 | 0.0050 | 0.100 | 0.0029 | 0.0022 | 0.25 | 0.3 | - | 0.3 | 0.1 | - | - | 0.0006 |
| Example 3 | 0.20 | 1.26 | 1.45 | 0.017 | 0.0022 | 0.038 | 0.0045 | 0.0030 | 0.10 | - | 0.4 | - | - | 0.04 | 0.10 | - |
| Example 4 | 0.15 | 1.47 | 2.00 | 0.018 | 0.0045 | 0.024 | 0.0025 | 0.0025 | 0.30 | - | - | - | - | - | - | - |
| Example 5 | 0.26 | 1.97 | 1.78 | 0.014 | 0.0024 | 0.075 | 0.0033 | 0.0028 | 0.32 | - | - | 0.2 | 0.3 | 0.06 | 0.06 | 0.0010 |
| Example 6 | 0.30 | 0.80 | 1.36 | 0.015 | 0.0030 | 0.011 | 0.0026 | 0.0026 | 0.50 | 0.5 | 0.2 | 0.1 | - | 0.01 | 0.02 | 0.0008 |
| Example 7 | 0.33 | 1.05 | 1.22 | 0.013 | 0.0013 | 0.058 | 0.0050 | 0.0023 | 0.44 | 0.2 | - | 0.5 | - | - | - | - |
| Example 8 | 0.35 | 1.38 | 1.69 | 0.016 | 0.0037 | 0.083 | 0.0028 | 0.0015 | 0.38 | 0.4 | 0.1 | - | 0.5 | - | - | 0.0005 |
| Comparative Example 1 | 0.07 | 1.58 | 1.76 | 0.009 | 0.0030 | 0.032 | - | - | - | 0.27 | - | - | 0.46 | 0.024 | - | - |
| Comparative Example 2 | 0.09 | 1.41 | 1.65 | 0.008 | 0.0040 | 0.037 | - | - | - | 0.22 | - | - | 0.35 | 0.031 | - | - |
| Comparative Example 3 | 0.10 | 1.56 | 1.45 | 0.009 | 0.0040 | 0.033 | - | - | - | 0.20 | - | - | 0.30 | 0.032 | - | - |
| Comparative Example 4 | 0.078 | 0.11 | 0.82 | 0.014 | 0.0015 | 0.039 | 0.0030 | 0.0021 | - | 0.49 | 0.1 | | 0.29 | - | - | - |

**Table 2**

| | Heating temperature / °C | Initial rolling temperature / °C | Cumulative deformation during rough rolling / % | Temperature of intermediate blank / °C | Cumulative deformation during finsh rolling / % | Final rolling temperature /°C | Water cooling rate (°C/s) | Coiling temperature / °C |
|---|---|---|---|---|---|---|---|---|
| Example 1 | 1260 | 1100 | 55 | 980 | 95.7 | 880 | 30 | 510 |
| Example 2 | 1160 | 1050 | 80 | 965 | 88.0 | 910 | 18 | 400 |
| Example 3 | 1100 | 1000 | 65 | 950 | 98.3 | 800 | 77 | 450 |
| Example 4 | 1180 | 1070 | 60 | 990 | 92.5 | 930 | 15 | 520 |
| Example 5 | 1130 | 1020 | 70 | 970 | 96.3 | 830 | 69 | 430 |
| Example 6 | 1220 | 1090 | 50 | 1000 | 93.6 | 950 | 10 | 500 |
| Example 7 | 1150 | 1030 | 75 | 960 | 90.7 | 900 | 22 | 420 |
| Example 8 | 1300 | 1040 | 85 | 985 | 90.9 | 860 | 45 | 550 |

**Table 3**

| Example | Thickness of Steel Plate /mm | Yield Strength /MPa | Tensile Strength / MPa | Elongation Rate / % | Hole Expansion Rate / % | Residual Austenite /% |
|---|---|---|---|---|---|---|
| Example 1 | 4.8 | 762 | 838 | 33 | 88 | 5.46 |
| Example 2 | 6.0 | 770 | 874 | 31 | 75 | 8.03 |
| Example 3 | 1.5 | 751 | 862 | 33 | 81 | 7.44 |
| Example 4 | 7.5 | 733 | 845 | 32 | 92 | 6.32 |
| Example 5 | 2.8 | 867 | 1038 | 28 | 53 | 8.58 |
| Example 6 | 8.0 | 884 | 1073 | 26 | 55 | 9.17 |
| Example 7 | 5.8 | 875 | 1024 | 27 | 64 | 10.39 |
| Example 8 | 3.4 | 896 | 1050 | 27 | 58 | 11.45 |
| Comparative Example 1 | 4.5 | 512 | 891 | 18 | - | - |
| Comparative Example 2 | 5.0 | 507 | 889 | 19 | - | - |
| Comparative Example 3 | 6.0 | 494 | 873 | 20.5 | - | - |
| Comparative Example 4 | 3.0 | 787 | 826 | 10.9 | 91 | - |

## Claims

1. A steel comprising the following components in percentage by weight: C: 0.10~0.35%, Si: 0.8~2.0%, Mn: 1.0~2.5%, P≤0.02%, S≤0.005%, Al: 0.01~0.1%, N≤0.005%, V: 0.10~0.50%, O≤0.003%, with the balance being Fe and other inevitable impurities; wherein:
when the content of C is 0.10~0.25% and the content of V is 0.10~0.30%, the steel has a tensile strength of 780 MPa or more, an elongation rate of 30% or more, and a hole expansion rate of 65% or more; and
when the content of C is 0.25-0.35% and the content of V is 0.30-0.50%, the steel has a tensile strength of 980 MPa or more, an elongation rate of 25% or more, and a hole expansion rate of 50% or more.

2. The steel according to claim 1, wherein the steel further comprises one or more selected from the group consisting of Mo, Cu, Ni, Cr, Nb, V and B; wherein, Mo≤0.5%, Cu≤0.5%, Ni≤0.5%, Cr≤0.5%, Nb≤0.06%, V≤0.10%, B≤0.001%.

3. The steel according to claim 1, wherein the inevitable impurities include S ≤ 0.003 wt%.

4. The steel according to claim 1, wherein the inevitable impurities include N ≤ 0.004 wt%.

5. The steel according to any one of claims 1-4, wherein the steel has a microstructure of bainite and residual austenite, with the content of the austenite being ≥ 5%, and wherein the bainite contains nano-precipitated VC.

6. The steel according to any one of claims 1-5, wherein the steel has a yield strength of 700 MPa or more.

7. A method for manufacturing the steel according to any one of claims 1-6, including the following steps:
1) smelting and casting
smelting molten steel in a converter or an electric furnace according to the components specified in any one of claims 1-6, then secondary refining in a vacuum furnace, and then casting it into a casting blank or a casting ingot;
2) reheating the casting blank or the casting ingot
heating temperature ≥ 1100 °C, holding time: 1-2 hours;
3) hot rolling and cooling the casting blank or the casting ingot
wherein the casting blank or the casting ingot is rolled at an initial rolling temperature of 1000 °C to 1100°C, then subjected to multiple passes of rolling with a relatively large deformation rate of 50% or more at 1000°C or higher to obtain an intermediate blank, then subjected to 3-5 passes of final rolling with a cumulative deformation of 70% or more after the intermediate blank reaches 950 °C to 1000 °C, obtaining a steel strip; wherein the final rolling temperature is 800~950 °C;
wherein the cooling is controlled cooling, after the final rolling, the steel strip is water-cooled to a temperature between 400~550 °C at a cooling rate of 10 °C/s or more and coiled, and then steel coil is cooled to room temperature, obtaining a hot-rolled strip steel.

8. The method according to claim 7, wherein the method further includes step 4) pickling, wherein the hot-rolled strip steel is pickled at a running speed of 30~140 m/min, with a pickling temperature of 75~85 °C and a straightening rate of 3% or less, and then rinsed at a temperature in the range of 35~50 °C, and the surface of the hot-rolled strip steel is dried at a temperature of 120~140 °C, and oiled.
